# EUROPEAN PATENT APPLICATION

(11) **EP 4 101 559 A1**
(43) Date of publication of application: **14.12.2022**
(21) Application number: 21750186.5
(22) Date of filing: 03.02.2021
(51) Int. Cl.: B21J 15/32, B23P 19/00

(54) **CAPSULE FOR TRANSPORTING JOINING ELEMENTS AND INSTALLATION FOR PLACING SAME**

(30) Priority: 05.02.2020 ES 202030090
(71) Applicant: M. Torres Diseños Industriales, S.A.U., 31119 Torres De Elorz (Navarra) (ES)
(72) Inventor: TORRES MARTINEZ, Manuel, deceased (ES)
(74) Representative: Cabinet Beau de Loménie
(86) International application number: PCT/ES2021/070081
(87) International publication number: WO 2021/156534

(57) **Abstract**

The present invention relates to a capsule for transporting connecting elements (2) through a guide duct (3) for an installation for placing connecting elements (2), wherein the capsule (1) is configured to hold a connecting element (2) positioned longitudinally parallel to a guiding direction (4) of the capsule (1), holding being performed by means of at least one pivoting clamping element (5) and the clamping element (5) being forced to hold the connecting element (2) pressing it perpendicular to the guiding direction (4) for a variable clamping distance; and installation for placing connecting elements (2) that uses said capsule (1).

## Description

### Technical field

The present invention relates to the industry dedicated to the supply of connecting elements through guide ducts by blowing or absorption, and more specifically with protection devices for the connecting elements during the transport thereof through said guide ducts, for supplying them from a storage unit to an application machine.

### State of the art

Currently, supply systems for connecting elements such as rivets are widely known. These systems are especially relevant in the aeronautical sector where a large number of rivets must be installed, and must be installed quickly and profitably, although they can be used in any sector of the industry that requires a continuous supply of connecting elements. To speed up this process, supply systems by blowing or absorption transfer rivets through a guide duct from a storage location to a head of a riveting or rivet application machine. In this type of supply systems, the rivet is selected and sent through the guide duct to a machine head where the riveting is carried out.

As mentioned above these rivets must be installed quickly and safely, however the tools used to handle the rivets can become dirty from contaminants or oils. As a result, the rivets can stick to the tools instead of being released in a predictable manner, or even cause stalling in the supply duct due to the turning of the rivets that force a machine stop and therefore slow down the process.

In certain situations, the application of a sealant to the connecting elements to ensure the final connection is required. Solutions are known in which the connecting element travels through the guide duct and then the sealant is applied thereto at the time of application. This implies that it is not possible to apply the required sealant during the supply and consequently the head of the application machine of the connecting element is forced to include the ability to apply the sealant. This method increases the complexity and weight in the head, also increasing the risk of contamination by sealant in that area.

In other embodiments, a protective capsule is used to transfer the rivet until the final application. An example is JP04437588, which uses a protection capsule especially suitable for short rivets the axis of which is less than or close to the diameter of the head thereof. For this purpose, it uses a capsule with a lateral opening along the entire length thereof that enables the lateral insertion of the rivet. When inserting the rivet into the capsule, the rivet must be pressed against a retaining element which, once its force has expired, retains the rivet against the inner wall of the capsule. In this way, the rivet is axially supported on a flat surface with the rivet head and is centred inside the capsule by the action of the retaining element. In addition, to prevent the rivet from coming out of the capsule axially, said capsule comprises an upper tab that prevents the rivet from coming out if it is axially moved.

However, this embodiment limits the use of different rivets since the lateral opening of the capsule must have different dimensions depending on the diameter of the rivet axis. In addition, it does not admit, for example, sleeve rivets, since the head of the rivet would hit the upper tab, preventing it from being housed in the capsule. Additionally, the fixation of the rivet in the capsule is only lateral, allowing an axial movement that can cause the rivet to get hit or get stalled in the capsule. Insertion and extraction tasks are also made difficult since the insertion is carried out laterally, so the radius of action of the machine must be greater. And it would not be valid for connecting elements that require the application of a sealant, since the connecting element is pressed laterally against the wall of the capsule and the sealant would remain adhered to the wall of the capsule itself.

Another known embodiment that tries to solve these drawbacks comprises a rivet feeding system wherein the rivet is first selected and inspected and sealant is applied thereto before sending it to the application head. In this case, since a sealant is applied to the rivet, the rivet must be protected from being damaged and from contaminating the inside of the supply tube. For this purpose, it uses a capsule that partially covers the rivet, housing inside the rivet sleeve where the sealant is applied. In this way, the rivet is protected from contaminants and the sealant applied to the connecting element is also protected.

Said capsule of the state of the art is configured exclusively for sleeve rivets. In this way, the capsule houses inside the rivet area where the sealant is applied, in this case the rivet sleeve. This capsule has a rivet insertion hole where the sleeve is inserted. The rivet is held in the capsule by the sleeve by supporting the head of the rivet sleeve in a recess made in the upper portion of the capsule. To ensure the rivet does not come out of the capsule axially, three flexible parts connected to the capsule are used that prevent it from coming out through the upper portion with tabs that remain on the head of the rivet sleeve.

However, this configuration requires having a capsule for each different rivet diameter since the recess is specifically configured for a fixed diameter of the rivet sleeve head. Likewise, it will only be valid for the sleeve rivet type, said capsule not being able to be used for other types of fixing elements such as blind rivets or temporary clamps, since they do not have the characteristic rim of the rivet sleeve for holding thereof.

Another drawback of this type of capsule is that only the lower portion of the rivet from the head of the sleeve is housed therein and, therefore, the head of the rivet remains outside. The risk of this configuration is that the head of the rivet rubs against the supply tube, being able to tilt with respect to the sleeve. Contributing to this effect is the fact that the rivet is only fixed axially and not laterally, so that it can be off-centred or tilted during transport through the supply guide duct and be faulty when it reaches the application point. To prevent this risk, the outer diameter of the capsule must be adjusted to the inside of the tube, leaving a slight clearance. In this way the capsule does not tilt and therefore the rivet does not rub against the tube. However, by leaving so little separation between the tube and the capsule, when there are small deformations in the supply tube, the capsule gets stalled given the little free space between the tube and the capsule, causing an unwanted stoppage of the machine.

In view of the described drawbacks or limitations that presently existing solutions have, a solution is required that protects the rivet sealant, while preventing stalling and allowing versatility for the protection and delivery of different dimensions and types of connecting elements.

### Object of the invention

In order to meet this objective and solve the technical problems discussed so far, in addition to providing additional advantages that can be derived later, the present invention provides a capsule for transporting connecting elements through a guide duct for an installation for placing connecting elements, wherein the capsule is configured to hold a connecting element positioned longitudinally parallel to a guiding direction of the capsule, holding being performed by means of at least one pivoting clamping element and the clamping element being forced to hold the connecting element pressing it perpendicular to the guiding direction for a variable clamping distance; and an installation for placing connecting elements that uses said capsule.

With this configuration the connecting element is completely secured in the capsule for the transport thereof through the guide duct from a supply storage unit to an application machine, said capsule being suited to collaborate with the guide duct. In the preferred embodiment, the capsule is cylindrical in shape in correspondence with the guide duct, but it is also possible with any other geometry as long as this correspondence between the capsule and the guide duct occurs.

To secure the connecting element in the capsule, by means of the clamping provided by the clamping element, it is perpendicularly pressed on the connecting element. This configuration holds the connecting element with sufficient effort to hold it both axially and radially, thus being able to position it in a centred manner. Therefore, the connecting element moves completely immobilised and centred, ensuring that it does not move or tilt during transport. It is also possible to maintain the axial centring thereof, contributing to the automation of the process since it will be ready for the application machine to accurately extract it and apply it.

In addition, thanks to the variable clamping distance provided by the pivoting of the clamping element, said capsule has the capacity to hold connecting elements of different diameters. The clamping element has an opening and closing path that allows it to radially push the connecting element when it is compressed and to be suitable for different diameters. In this way, the need to manufacture a capsule for each range of diameters is prevented, thus obtaining a versatile capsule that is valid for holding connecting elements of different diameters.

This versatility of the capsule is not only related to the possibility of housing different diameters of connecting elements, but also to the fact that it is possible to house different types of connecting elements inside the capsule. This is possible thanks to the fact that the clamping element presses on an isolated area of the connecting element, this isolated area of the connecting element preferably being a vertical line of length equal to the vertical extension of the clamping element. This isolated area of the connecting element can be an isolated area of the axis of the connecting element that can be selected between an isolated area of the stem of a blind rivet, an isolated area of the stem of a temporary clamp, an isolated area of the thread of a sleeve rivet and an isolated area of the thread of a screw, being able to be any other connecting element that has a central axis. This possibility of housing different types of connecting elements is not contemplated in the known embodiments.

Additionally, the capsule is configured to at least partially house the connecting element therein, completely surrounding the portion of the connecting element that it laterally houses therein. Thus, greater protection of the connecting element is ensured by holding it inside the capsule.

In a preferred configuration of the invention, the capsule has the clamping axis parallel to the guiding direction of the capsule. This configuration allows a great compression effort to be made, requiring a minimum space to house the clamping element inside the capsule. However, it will also be possible for the axis to be oriented according to another direction, such as perpendicular to the guiding direction if required, although the space required to house the clamping element would be greater.

Preferably, according to the invention, the clamping element is forced by tightening means that can be actuated from the outside perpendicularly to the guiding direction to release the connecting element. With this configuration, the clamping element automatically presses on the connecting element, being diametrically suited to the same. Both for the insertion and for the extraction thereof from the capsule it is necessary to actuate on said tightening means. Therefore, the capsule is laterally pressed from the outside by a preferably pneumatic mechanism of a feeding machine, although it could be, for example, a hydraulic, electrical, magnetic or other system, opening the clamping element is thus achieved by overcoming the force exerted by tightening means that can be selected between magnets and preloaded springs. In this way, the process is automated, speeding it up, facilitating the correct insertion of the connecting element into the capsule.

According to a preferred feature of the invention, the capsule comprises a plurality of clamping elements arranged with respective clamping axes that are radially equidistant. Preferably the number of clamping elements will be three, which, being distributed angularly equidistant, press the connecting element more effectively. Thus, the adjustment and centring of the connecting element in the capsule occurs automatically and in a safer manner. In addition, with the use of three clamping elements, the use of space is maximum, achieving greater friction against the connecting element and the compactness of the capsule.

As an alternative embodiment, to secure the connecting element more firmly, it is envisaged that the capsule optionally comprises at least two clamping elements spaced axially apart, and preferably three clamping elements in each corresponding isolated area. In this way, the connecting element can be held in two specific areas of the axis thereof when the connecting element is of great dimensions and requires a stronger hold.

According to a particular configuration of the invention, to provide an additional axial support to the connecting element, it is envisaged that the clamping element comprises a rib in the lower portion of the contact surface with the connecting element, said rib interacting with the end of the connecting element.

In this way, the axial hold of the connecting element is secured even more, if possible, preventing the movement thereof inside the capsule by means of this rib that acts as a stop. This configuration is especially relevant for cases where axial forces occur during the handling process of the connecting element inside the capsule that may exceed the retention force exerted by the clamping elements, being able to cause a relative movement between the connecting element and the capsule.

Additionally, preferably, the capsule comprises a cover that pivots perpendicular to the guiding direction, configured to cover the connecting element and being able to be actuated by means of closure means. This cover covers the portion of the connecting element that may be exposed, such as the head of a rivet. The connecting element is thus completely protected from external contaminants that could be inside the guide duct. It is a convenient configuration for rivets in which sealant is applied, since it is protected from external contaminants and from the possibility of said sealant being detached, remaining on the walls of the guide duct. In addition, this cover can be actuated by means of closure means, these being selectable between magnets and preloaded springs. These closure means can be laterally actuated from the outside, in this manner, in order to introduce the connecting element into the capsule, the feeding machine presses on the closure means of the upper portion and then on the tightening means of the clamping elements. The housing of the connecting element is facilitated, which will be held when it stops acting on the tightening means of the clamping element and will be totally protected when it stops acting on the closure means of the upper portion.

A versatile capsule is achieved that ensures the holding of the connecting element therein, restricting the axial and radial movement thereof, and that allows the connecting element to be protected from rubbing against the wall of the guide duct. In addition, in this manner the inconvenience of the rivet head rubbing against the guide duct is avoided, allowing greater clearance between the inner wall of the guide duct and the capsule to solve the stalling that is caused by the folds that can occur in the guide duct due to the flexibility thereof.

In particular, the upper portion of the capsule, i.e., the cover, is divided into a plurality of petals and preferably into three petals of complementary configuration. In this way, the petals complement each other during the closure, completely covering the connecting element. A simple opening and closure is thus achieved, allowing a more compact capsule to be manufactured. It also provides an additional fulcrum for longer connecting elements which will have a higher weight and therefore greater inertia which could tend to tilt the connecting element causing problems when transferring it to the insertion system. This configuration further enables a simpler insertion and removal of the connecting element, the closure means being able to be actuated from the outside perpendicularly to the guiding direction by means of preferably pneumatic actuators, although it could be, for example, a hydraulic, electrical, magnetic or other system. The automation of the process is facilitated, speeding up production and reducing the costs of the process.

According to another aspect of the invention, the capsule is configured to be aligned, with respect to a head of an application machine of the connecting element, by means of orientation means. Thus, when the capsule is placed both in a receiving base of the feeding machine and in the application machine, the capsule is actuated upon leaving it aligned with respect to the receiving base so that the pneumatic actuators are aligned with the tightening means and closure means. This alignment is preferably carried out by means of magnets located at the bottom of the capsule in correspondence with corresponding magnets on the receiving base of the capsule in the feeding and application machines. A degree of accuracy is thus achieved in the placing of the capsule in relation to the pneumatic actuators that facilitates the automation of the process.

In a further embodiment, it is envisaged that the capsule comprises a lower through opening (the lower portion being the one located in the lowest portion according to the guiding direction) for the housed connecting element. Thus, the passage of the connecting element is enabled when the longitudinal dimensions of the same are greater than those of the capsule. The rivet is thus protected in its entirety while avoiding having to manufacture special capsules for this type of rivet with a greater longitudinal dimension, which gives the capsule even more versatility, being able to house different types of rivets unlike already known solutions.

In this way, a versatile and universal capsule is achieved, saving on manufacturing costs and reducing the complexity of the heads of the supply and application machines, allowing the connecting element to move safely along the guide duct, achieving an installation for placing rivets that is fast and safe.

According to a preferred embodiment, the capsule is used in an installation for placing connecting elements for the transport thereof, comprising; a storage unit that includes different types of connecting elements; a selection machine comprising an arm for transferring different connecting elements to the capsule; a guide duct for transferring the capsule with the connecting element; and an application machine comprising an extraction arm for extracting the connecting element for the placement thereof in an application site.

In this way, it is possible to select different types of connecting elements from a storage unit for the final placement thereof as required without having to stop the process and replace a selection and application head. In addition, it will not be necessary to have several capsules depending on the type or size of the connecting element, since the same capsule will serve for a wide range of diameters.

Additionally, the installation for placing the connecting elements comprises preferably pneumatic actuators, although it could be, for example, a hydraulic, electrical, magnetic or other insertion system in the selection machine, which actuate perpendicular to the guiding direction for opening the tightening means and the closure means of the capsule, and extraction actuators in the application machine that actuate perpendicular to the guiding direction for opening the tightening means and the closure means of the capsule.

With this configuration, automation of the process for placing connecting elements, and for different types and sizes, is achieved. In this way, a fast and versatile solution is achieved that speeds up the process of applying connecting elements, highly indicated in sectors such as aeronautics.

### Description of the figures

Figure 1 shows a schematic perspective view of a capsule (1) with the cover (8) with the petals (9) thereof open and the connecting element (2) housed therein with the clamping elements (5).
Figure 2 shows a schematic front view of the capsule (1) inside a guide duct (3), the latter being cross-sectioned for better display, also indicating by means of an arrow the delivery direction (4) of the connecting element (2).
Figure 3 shows a schematic perspective view of the capsule (1) in which the connecting element (2) is partially housed.
Figure 4 shows a schematic upper view of the open capsule (1) wherein actuated clamping elements (5) are displayed, without the connecting element (2).
Figures 5 and 6 show schematic cross-sectional views of the capsule (1) with the connecting element (2) and without it, respectively.
Figure 7 shows a schematic cross-sectional view of the capsule (1) wherein the clamping elements (5) and the clamping axis (6) thereof can be seen, without the connecting element (2).
Figure 8 shows a schematic cross-sectional view of the capsule (1) wherein the clamping elements (5) actuated against the connecting element (2) can be seen.
Figure 9 shows a schematic longitudinal cross-sectional view of the capsule (1) wherein the connecting element (2) corresponds to a temporary clamp.
Figure 10 shows a schematic lower view of the capsule (1) wherein the orientation means (12) are displayed.
Figure 11 shows a schematic view of an installation for placing the connecting element (2) from a storage unit (16) to an application machine (14) for the final placement thereof.

### Detailed description of the invention

The present invention relates to a capsule for transporting connecting elements (2) through a guide duct (3) for an installation for placing connecting elements (2), wherein the capsule (1) is configured to hold a connecting element (2) positioned longitudinally parallel to a guiding direction (4) of the capsule (1), holding being performed by means of at least one pivoting clamping element (5) and the clamping element (5) being forced to hold the connecting element (2) pressing it perpendicular to the guiding direction (4) for a variable clamping distance.

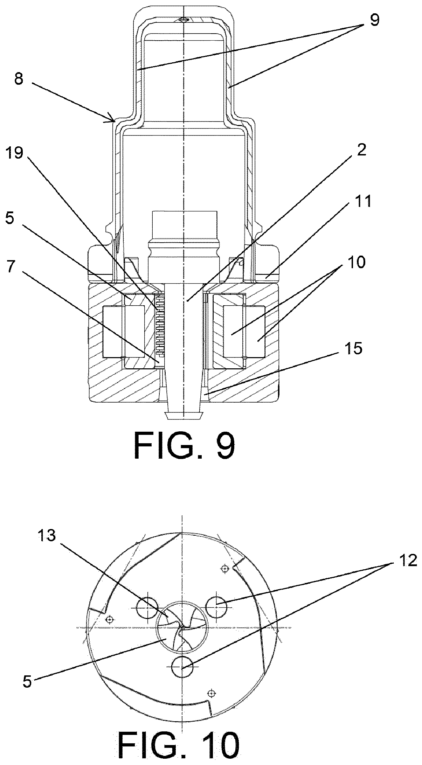

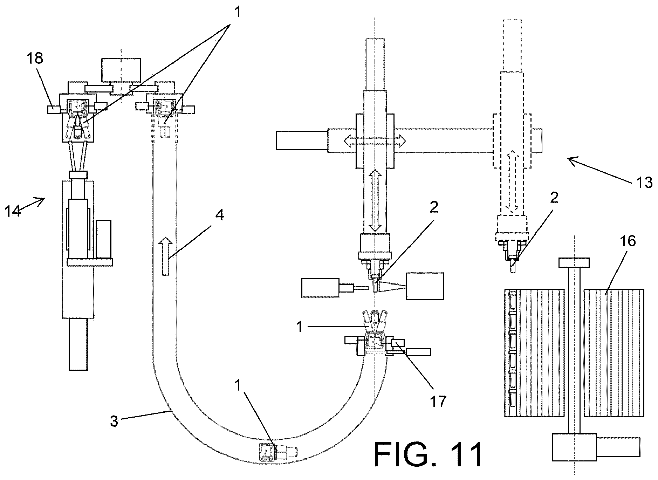

Figure 11 shows the installation for placing the connecting elements and the different steps that the connecting element (2) undergoes for its transport until the final application thereof according to a preferred embodiment. Thus, firstly, a selection machine (13) selects the connecting element (2) from a storage unit (16), the connecting element (2) corresponding to a sleeve rivet in the preferred exemplary embodiment illustrated. Said connecting element (2) is facing a base (not shown in the figures) of the selection machine (13). A capsule (1) is placed on said base, aligning the same with respect to the base thanks to orientation means (12), in this case three magnets (figure 10) in correspondence with three magnets of the base of the selection machine (13).

At this time a sealant is applied to the connecting element (2). The above alignment is required for closure means (11) of petals (9) of the cover (8) of the capsule to be facing preferably pneumatic insertion actuators (17) of the feeding machine (13). Said insertion actuators (17) actuate laterally from the outside perpendicular to the guiding direction (4) on the closure means (11) located at the base of the petals (9) in the joint thereof with the capsule (1).

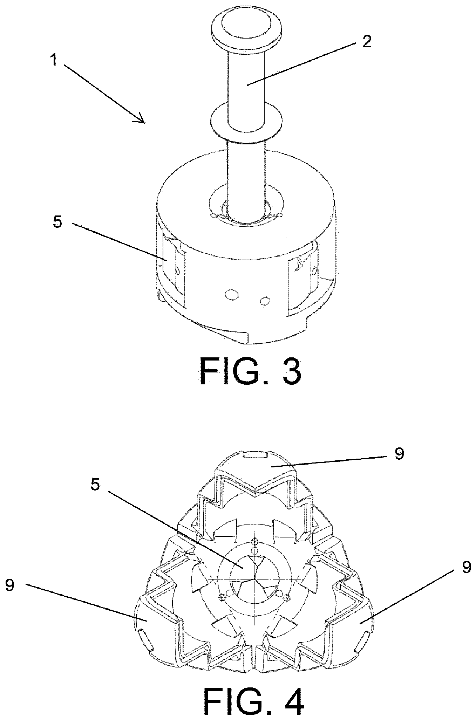

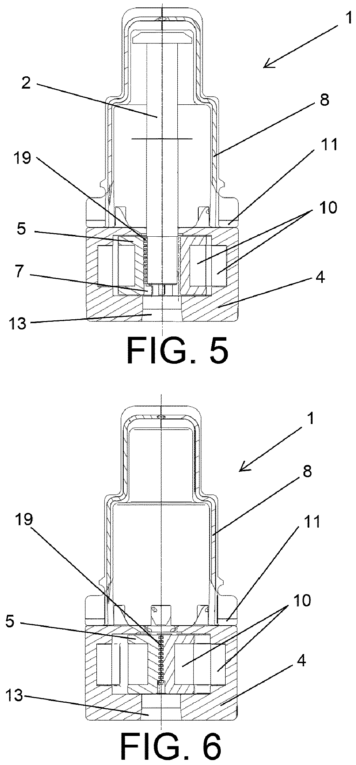

Figure 6 shows the capsule (1) completely closed without the connecting element (2) therein. It is then when by means of the insertion actuators (17) the force exerted by the closure means (11) is overcome, these closure means (11) being able to be magnets or preloaded springs (not shown in the figures) that actuate the cover (8) to keep it closed, thus overcoming said force of the closure means (11) the cover (8) is opened. As can be seen in figure 4, the opening of the petals (9) is achieved to make way for the insertion of the connecting element (2).

However, to house the connecting element (2) in the capsule (1), the clamping elements (5) must be opened. These clamping elements (5) are configured to hold the connecting element (2). Each clamping element (5) has a clamping axis (6) parallel to the guiding direction (4), the clamping axis (6) being able to be perpendicular in an optional embodiment. In any case, the clamping element (5) due to the pivoting thereof and the thrust caused by tightening means (10) is normally actuated and therefore closed, as can be seen in figures 4, 6 and 7.

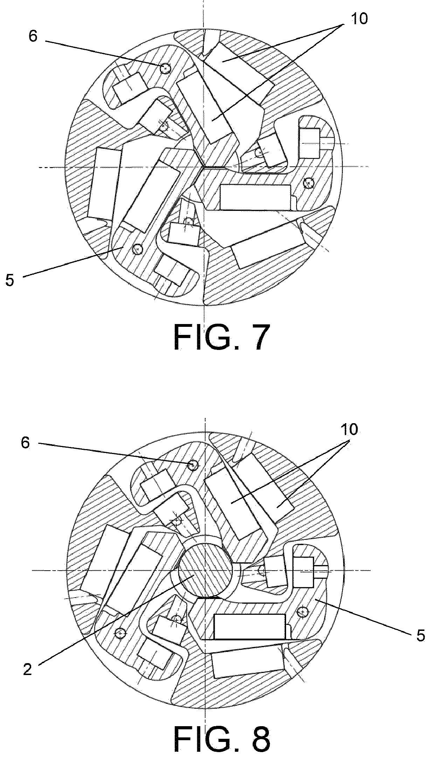

To open the clamping elements (5), which will preferably be at least two and more preferably three like the illustrated example, the tightening means (10) are actuated upon in the same manner as upon the closure means (11). Thus, insertion actuators (17) actuate laterally from the outside perpendicular to the guiding direction (4) overcoming the force of the tightening means (10) which may be magnets (10) or preloaded springs. In a preferred embodiment, as figure 7 shows, each clamping element (5) comprises a magnet in contrast to a magnet comprised in the capsule (1), both being of the same opposite polarity to generate the required repulsion force, thus representing the tightening means (10). In this way they repel each other, the clamping elements (5) being in the closed position in the absence of the connecting element (2) (figures 4, 6 and 7).

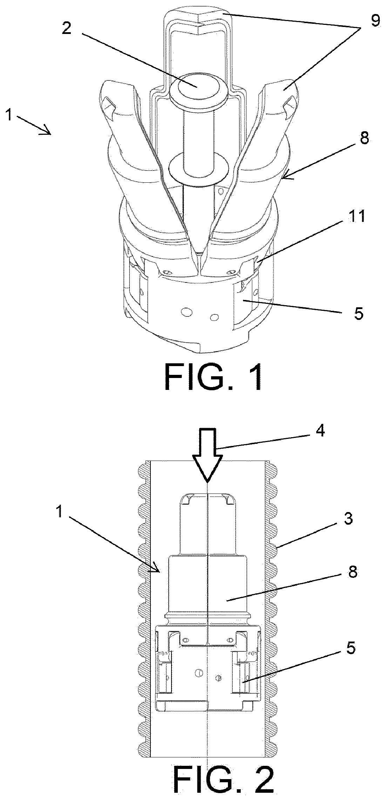

Once said tightening means (10) have been actuated upon, the path for inserting the connecting element (2) inside the capsule (1) is free, as can be seen in figure 1 where the connecting element (2) is inserted into the capsule (1).

At this moment, actuation on the tightening means (10) and the closure means (11) is stopped, the connecting element (2) being adjusted diametrically by the clamping elements (5) and completely protected by the cover (8) with its petals (9) closed.

As can be seen in figures 5 and 8, the connecting element (2) is adjusted by the pushing pressure exerted by the clamping elements (5) due to the magnets (10). This thrust occurs in the radial direction of the connecting element (2) and due to the pivoting of the clamping elements (5) a diametrical adjustment to the connecting element (2) occurs that prevents the movement thereof both radially and axially.

The cover (8), in addition to protecting, also serves as an additional support for connecting elements (2) of great lengths. In this case, if due to the inertia of the movement along the tube (3) the connecting element (2) tends to tilt, the cover (8) limits this tilt and the force of the clamping elements (5) exert the force required to bring the connecting element (2) back to the initial position thereof, once the inertial forces have disappeared.

In order for the adjustment of the connecting element (2) with the clamping elements (5) to be even more effective, it is envisaged that a grooved surface (19) is optionally on the contact surface of the clamping element (5) with the connecting element (2). This improves the mooring, immobilising the connecting element (2) with greater safety.

With this thrust of the clamping elements (5), it is also possible to centre the connecting element (2) along a direction parallel to the guiding direction. This diametral adjustment provided by the clamping elements (5) enables the adjustment to be valid for connecting elements (2) of different diameters, even for different connecting elements (2) due to the pivoting thereof.

This is possible due to the fact that each clamping element (5) presses on at least one isolated area of the connecting element (2), preferably a line of the connecting element (2), this isolated area of the axis of the connecting element (2) being able to be selected between an isolated area of the stem of a blind rivet, an isolated area of the stem of a temporary clamp, an isolated area of the thread of a sleeve rivet and an isolated area of the thread of a screw, and it can be any other connecting element (2) that has a central axis. Therefore, it provides the capsule (1) with a versatility of use for different types of connecting elements (2) and of different sizes that gives the installation a greater speed for placing connecting elements (2) since it does not have to change the type of capsule (1) or head when different types of rivets are continuously required.

In a specific configuration for cases wherein axial forces occur during the handling process of the connecting element (2) inside the capsule (1) that can exceed the retention force exerted by the clamping elements (5), being able to cause a relative movement between the connecting element (2) and the capsule (1), the clamping element (5) comprises a rib (7) in the lower portion of the contact surface with the connecting element (2). Thus, an axial stop is provided that provides additional support to the connecting element (2) which will rest at the lower end thereof on said rib (7) (figure 5).

According to an alternative embodiment (not shown), it is envisaged that the capsule comprises at least two clamping elements (5) spaced axially apart and preferably three clamping elements (5) pressing on an isolated area of the axis of the connecting element (2) and three other clamping elements (5) pressing on a point area axially distanced from the previous one. In this way, an additional adjustment for connecting elements (2) is achieved which, due to the dimensions thereof, have greater weight and therefore greater inertia.

Figure 9 shows the use of the capsule (1) for temporary clamps instead of the standard rivets. In this example the aforementioned versatility is demonstrated, however, both for these temporary clamps (2) and for connecting elements (2) wherein the axis has a longer longitudinal dimension, there would be problems for housing the connecting element (2) that would interfere with the lower portion of the capsule. Therefore, an additional feature of the invention is that it comprises a through opening (15) to allow the passage of said special connecting elements (2).

Once the connecting element (2) has been fixed and protected inside the capsule (1), the capsule (1) is transferred in the guide duct (3) to the application machine (14) by means of pressurised air, moving it up to the application head according to the guiding direction (4) (figures 2 and 11).

Once the capsule (1) reaches the limit switch of the guide duct (3), the capsule (1) is positioned in front of the application machine (14). The capsule (1) is then aligned in the same way as in the application machine (13) thanks to the orientation means (12) located in the lower portion of the capsule (1). To release the connecting element (2) from the capsule (1), the tightening means (10) and the closure means (11) are pressed on again, as in the supply step, by means of preferably pneumatic extraction actuators (18). Then an extraction arm extracts the connecting element (2) to place it in an application head for the final placement thereof.

At this moment the capsule (1) returns to the supply point for a new use.

Finally, according to a more simplified alternative embodiment of the capsule, Figure 3 shows an optional exemplary embodiment of the capsule (1) wherein the connecting element (2) is completely held both radially and axially by the clamping elements (5) being partially housed therein. The connecting element (2) is arranged completely covered laterally without being covered at the upper portion thereof. This embodiment is applicable to connecting elements (2) of small longitudinal dimensions and to connecting elements (2) that do not require the application of a sealant.

## Claims

1. A capsule for transporting connecting elements (2) through a guide duct (3) for an installation for placing connecting elements (2), wherein the capsule (1) is configured to hold a connecting element (2) positioned longitudinally parallel to a guiding direction (4) of the capsule (1), holding being performed by means of at least one pivoting clamping element (5) and the clamping element (5) being forced to hold the connecting element (2) pressing it perpendicular to the guiding direction (4) for a variable clamping distance.

2. The capsule (1) according to claim 1, **characterised in that** it at least partially houses the connecting element (2) therein, completely surrounding the connecting element (2) laterally.

3. The capsule (1) according to claim 1 or 2, **characterised in that** the clamping element (5) pivots about a clamping axis (6) parallel to the guiding direction (4) of the capsule (1).

4. The capsule (1) according to any one of claims 1 to 3, **characterised in that** the clamping element (5) is forced by means of tightening means (10) that can be actuated from the outside perpendicular to the guiding direction (4) to release the connecting element (2), the tightening means (10) being selected between magnets and preloaded springs.

5. The capsule (1) according to any one of claims 1 to 4, **characterised in that** it comprises a plurality of clamping elements (5) arranged with respective clamping axes (6) that are radially equidistant.

6. The capsule (1) according to any one of claims 1 to 5, **characterised in that** the clamping element (5) comprises a rib (7), in the lower portion of the contact surface with the connecting element (2), configured to provide an axial stop to the connecting element (2).

7. The capsule (1) according to any one of claims 1 to 6, **characterised in that** it comprises a cover (8) that pivots perpendicular to the guiding direction (4), configured to cover the connecting element (2) and being able to be actuated by means of closure means (11).

8. The capsule (1) according to claim 7, **characterised in that** the cover (8) is divided into a plurality of petals (9) of complementary configuration.

9. The capsule (1) according to claim 7 or 8, **characterised in that** the closure means (11) of the cover (8) can be actuated from the outside perpendicular to the guiding direction (4) to uncover the connecting element (2).

10. The capsule (1) according to any one of claims 1 to 9, **characterised in that** it is configured to be aligned, with respect to a head of an application machine (14) of the connecting element (2), by means of orientation means (12).

11. The capsule (1) according to any one of claims 1 to 10, **characterised in that** it comprises a lower through opening (15) for the housed connecting element (2).

12. An installation for placing connecting elements (2) that uses the capsule (1) for transporting connecting elements (2) according to the preceding claims, comprising:
• a storage unit (16) that includes different types of connecting elements (2);
• a selection machine (13) comprising an arm for transferring different connecting elements (2) to the capsule (1);
• and a guide duct (3) for transferring the capsule (1) with the connecting element (2);
• an application machine (14) comprising an extraction arm for extracting the connecting element (2) for the placement thereof in an application site.

13. The installation for placing connecting elements (2) according to claim 12, comprising:
• insertion actuators (17) that actuate perpendicular to the guiding direction (4) for opening the tightening means (10) and the closure means (11) of the capsule (1);
• and extraction actuators (18) that actuate perpendicular to the guiding direction (4) for opening the tightening means (10) and the closure means (11) of the capsule (1).
